# EUROPÄISCHE PATENTANMELDUNG

(11) **EP 4 455 488 A1**
(43) Veröffentlichungstag der Anmeldung: **30.10.2024**
(21) Anmeldenummer: 24166817.7
(22) Anmeldetag: 27.03.2024
(51) Int. Cl.: F15B 11/16

(54) **VORRICHTUNG ZUM BETREIBEN EINER LASTGESTEUERTEN HYDRAULIKVER-SORGUNG EINES LANDWIRTSCHAFTLICHEN TRAKTORS**

(30) Priorität: 27.04.2023 DE 102023110913; 22.05.2023 DE 102023113309
(71) Anmelder: Deere & Company, Moline, IL 61265 (US)
(72) Erfinder: Billich, Manuel, Mannheim (DE)
(74) Vertreter: Dehnhardt, Florian Christopher

(57) **Zusammenfassung**

Vorrichtung (14) zum Betreiben einer lastgesteuerten Hydraulikversorgung eines landwirtschaftlichen Traktors (12), umfassend eine bezüglich ihres Verdrängungsvolumens einstellbare Hydraulikpumpe (18) zur Versorgung eines hydraulischen Verbrauchers (22a, 22b, 22c, 22d) mit unter Druck stehender Hydraulikflüssigkeit. Hierbei ist ein zur Ausführung einer übergeordneten Hydraulikfunktion vorgesehener primärer hydraulischer Verbraucher (22a, 22b) unmittelbar und ein zur Ausführung einer untergeordneten Hydraulikfunktion vorgesehener sekundärer hydraulischer Verbraucher (22c, 22d) über ein zwischengeschaltetes elektrisch betätigbares Proportionalventil (44, 46) mit einem Förderausgang (20) der Hydraulikpumpe (18) verbunden bzw. verbindbar, wobei das Proportionalventil (44, 46) von einer Kontrolleinheit (24) in eine geschlossene Ventilstellung verbracht wird, wenn diese erkennt, dass die angeforderte Leistung der hydraulischen Verbraucher (22a, 22b, 22c, 22d) die Förderkapazität der Hydraulikpumpe (18) überschreitet und/oder die dem sekundären hydraulischen Verbraucher (22c, 22d) zugeordnete Hydraulikfunktion inaktiv ist.

## Beschreibung

Die Erfindung betrifft eine Vorrichtung zum Betreiben einer lastgesteuerten Hydraulikversorgung eines landwirtschaftlichen Traktors, mit einer bezüglich ihres Verdrängungsvolumens einstellbaren Hydraulikpumpe zur Versorgung eines hydraulischen Verbrauchers mit unter Druck stehender Hydraulikflüssigkeit.

Die Verwendung lastgesteuerter Hydrauliksysteme zum Betrieb hydraulischer Verbraucher stellt eine in landwirtschaftlichen Traktoren übliche Maßnahme dar. Das Hydrauliksystem umfasst hierzu eine aus einem Hydraulikreservoir des landwirtschaftlichen Traktors mit Hydraulikflüssigkeit gespeiste Hydraulikpumpe, deren Verdrängungsvolumen abhängig von einem an einem Steuereingang anliegenden Lastmeldedruck anpassbar ist. Auf diese Weise ist eine dem tatsächlichen Leistungsbedarf entsprechende hydraulische (Energie-) Versorgung einer Vielzahl hydraulischer Verbraucher möglich. Da zum Betrieb der hydraulischen Verbraucher ein und dieselbe Hydraulikpumpe dient, deren Förderkapazität jedoch begrenzt ist, sind den hydraulischen Verbrauchern in der Regel unterschiedliche Versorgungsprioritäten zugeordnet. So stellen hydraulische Brems- und Lenksysteme übergeordnete Hydraulikfunktionen mit der höchsten Versorgungspriorität dar. Eine zu möglichen Funktionsbeeinträchtigungen führende Unterversorgung ist bei diesen hydraulischen Verbrauchern tunlichst auszuschließen. Dementsprechend wird hydraulischen Verbrauchern, die der Ausführung untergeordneter Hydraulikfunktionen dienen, eine geringere Versorgungspriorität zugeordnet, mit dem Ziel, deren hydraulische Versorgung bei Bedarf zugunsten derjenigen der hydraulischen Verbraucher der höchsten Versorgungspriorität einzuschränken. Zu den untergeordneten Hydraulikfunktionen zählen insbesondere solche, die den Betrieb von Komfort- und Arbeitsfunktionen des landwirtschaftlichen Traktors, wie zum Beispiel einer hydraulischen Achs- oder Kabinenfederung, einer Arbeitshydraulik einschließlich der Versorgung hydraulisch betriebener Arbeitsaggregate eines an dem landwirtschaftlichen Traktor angebrachten Zusatz- oder Anbaugeräts, aber auch eines hydraulisch betätigbaren Dreipunkt-Krafthebers betreffen.

In herkömmlichen Hydrauliksystemen ist die Einhaltung der Versorgungsprioritäten auf rein hydraulischem Wege mittels einer hydraulischen Steuerlogik gelöst, was aufgrund der zu verwendenden Ventilbaugruppen und hydraulischen Verbindungsleitungen einen dementsprechend hohen technischen Aufwand bzw. Bauraumbedarf bedingt.

Es ist daher Aufgabe der vorliegenden Erfindung, eine insbesondere hinsichtlich ihres technischen Aufwands bzw. Bauraumbedarfs verbesserte Vorrichtung der eingangs genannten Art anzugeben.

Diese Aufgabe wird durch eine Vorrichtung zum Betreiben einer lastgesteuerten Hydraulikversorgung eines landwirtschaftlichen Traktors mit den Merkmalen des Patentanspruchs 1 gelöst.

Die Vorrichtung zum Betreiben einer lastgesteuerten Hydraulikversorgung eines landwirtschaftlichen Traktors umfasst eine bezüglich ihres Verdrängungsvolumens einstellbare Hydraulikpumpe zur Versorgung eines hydraulischen Verbrauchers mit unter Druck stehender Hydraulikflüssigkeit. Erfindungsgemäß ist ein zur Ausführung einer übergeordneten Hydraulikfunktion vorgesehener primärer hydraulischer Verbraucher unmittelbar und ein zur Ausführung einer untergeordneten Hydraulikfunktion vorgesehener sekundärer hydraulischer Verbraucher über ein zwischengeschaltetes elektrisch betätigbares Proportionalventil mit einem Förderausgang der Hydraulikpumpe verbunden bzw. verbindbar, wobei das Proportionalventil von einer Kontrolleinheit in eine geschlossene Ventilstellung verbracht wird, wenn diese erkennt, dass die angeforderte Leistung der hydraulischen Verbraucher die Förderkapazität der Hydraulikpumpe überschreitet und/oder die dem sekundären hydraulischen Verbraucher zugeordnete Hydraulikfunktion inaktiv ist.

Auf diese Weise ist es möglich, durch gezielte Drosselung des durch das Proportionalventil hindurchtretenden Hydraulikvolumenstroms neben einer Priorisierung der hydraulischen Versorgung des primären hydraulischen Verbrauchers eine Energieeinsparung hinsichtlich inaktiver Hydraulikfunktionen sekundärer hydraulischer Verbraucher zu verwirklichen. Die Ansteuerung des Proportionalventils kann insbesondere auch derart erfolgen, dass eine Priorisierung der Hydraulikversorgung des primären hydraulischen Verbrauchers vorrangig zulasten sekundärer hydraulischer Verbraucher mit inaktiver Hydraulikfunktion erfolgt. In einem solchen Fall werden unerwünschte Einschränkungen aktiver Hydraulikfunktionen durch unnötige Drosselung der hydraulischen Versorgung weitgehend vermieden. Als Beispiel sei hier eine bei stillstehendem landwirtschaftlichen Traktor inaktive hydraulische Achs- oder Kabinenfederung erwähnt.

Aufgrund der Verwendung eines kompakt bauenden elektrisch betätigbaren Proportionalventils zeichnet sich die erfindungsgemäße Vorrichtung durch ein besonders gutes Verhältnis zwischen zu betreibendem technischen Aufwand und Bauraumbedarf aus, insbesondere auch aufgrund des Umstands, dass die eigentliche Steuerlogik softwaremäßig in der Kontrolleinheit implementierbar ist, sodass sich die benötigte Hardware auf ein Minimum reduzieren lässt.

Auch lassen sich solchermaßen die statischen und dynamischen Eigenschaften der verwendeten Hardwarekomponenten durch Zuordnung entsprechender Parameter in der Software abbilden und bei Bedarf leicht anpassen.

Vorteilhafte Ausführungen der erfindungsgemäßen Vorrichtung gehen aus den Unteransprüchen hervor.

Vorzugsweise schließt die Kontrolleinheit auf eine die Förderkapazität der Hydraulikpumpe überschreitende Leistungsanforderung der primären bzw. sekundären hydraulischen Verbraucher, wenn die Hydraulikpumpe einen auf ein maximales Verdrängungsvolumen hinweisenden Betriebszustand einnimmt oder sich diesem annähert. Das Erreichen eines derartigen Betriebszustands stellt einen verlässlichen Hinweis für eine potentiell bevorstehende Unterversorgung des primären hydraulischen Verbrauchers dar. Solange dieser kritische Zustand nicht erreicht ist, befindet sich das Proportionalventil in seiner vollständig geöffneten Stellung.

Im Allgemeinen wird das Verdrängungsvolumen der Hydraulikpumpe von der Kontrolleinheit nach Maßgabe einer durch einen jeweiligen Lastmeldedruck repräsentierten Lastanforderung des primären bzw. sekundären hydraulischen Verbrauchers eingestellt, wobei die Kontrolleinheit auf eine die Förderkapazität der Hydraulikpumpe überschreitende Leistungsanforderung schließt, wenn diese erkennt, dass eine zulässige Druckdifferenz zwischen einem am Förderausgang der Hydraulikpumpe anliegenden Systemdruck und dem jeweils höchsten Lastmeldedruck der hydraulischen Verbraucher unterschritten ist. Die Druckdifferenz liegt je nach verwendeter Hydraulikpumpe im Bereich von 10 bis 30 bar, und stellt eine gegenüber druckmindernden Leitungsverlusten des an die Kontrolleinheit mitgeteilten Lastmeldedrucks tolerante Einregelung des Verdrängungsvolumens sicher. Ein Unterschreiten der vorgegebenen Druckdifferenz liefert einen weiteren Hinweis auf eine potentiell bevorstehende Unterversorgung des primären hydraulischen Verbrauchers, dessen zusätzliche Berücksichtigung dahingehende Fehlinterpretationen weitgehend ausschließt. Zur Erfassung des Systemdrucks kann ein dem Förderausgang der Hydraulikpumpe zugeordneter Drucksensor dienen, dessen Sensorsignale der Kontrolleinheit zur Auswertung zugeführt werden.

Im einfachsten Fall erkennt die Kontrolleinheit den auf ein maximales Verdrängungsvolumen hinweisenden Betriebszustand der Hydraulikpumpe durch Auswertung eines Pumpenschwenkwinkels. Das Verdrängungsvolumen nimmt üblicherweise mit dem Betrag des Pumpenschwenkwinkels kontinuierlich zu. Dementsprechend ist ein Erreichen der zur Verfügung stehenden Förderkapazität der Hydraulikpumpe daran erkennbar, dass der Pumpenschwenkwinkel einen voll ausgelenkten Zustand in Richtung eines Endanschlags einnimmt. Die Erfassung des Pumpenschwenkwinkels erfolgt beispielsweise mittels eines Schwenkwinkelsensors, dessen Sensorsignale ebenfalls der Kontrolleinheit zur Auswertung zugeführt werden.

Des Weiteren besteht die Möglichkeit, dass mehrere über separate Proportionalventile mit dem Förderausgang der Hydraulikpumpe verbindbare sekundäre hydraulische Verbraucher vorhanden sind, wobei von der Kontrolleinheit zur Reduzierung des Leistungsbedarfs entsprechend der Förderkapazität der Hydraulikpumpe die Proportionalventile synchron und/oder in einer vorgegebenen Reihenfolge in eine geschlossene Stellung verbracht werden. Letzteres erfolgt insbesondere schrittweise nur insoweit, als dies zur Wiederherstellung einer ausreichenden Hydraulikversorgung des primären hydraulischen Verbrauchers erforderlich ist. Hierdurch lässt sich eine weitere Unterteilung bzw. Abstufung der Versorgungsprioritäten der sekundären hydraulischen Verbraucher verwirklichen, sodass der Betrieb bestimmter Hydraulikfunktionen so weit wie möglich aufrechterhalten werden kann.

Um überdruckbedingten Schäden des Hydrauliksystems oder der damit betriebenen hydraulischen Verbraucher bzw. peripherer Komponenten vorzubeugen, kann vorgesehen sein, dass von der Kontrolleinheit der am Förderausgang der Hydraulikpumpe anliegende Systemdruck durch Anpassung des Pumpenschwenkwinkels und damit des Verdrängungsvolumens begrenzt wird. Die Begrenzung des Systemdrucks erfolgt hierbei entsprechend einem zulässigen Höchstwert in der Größenordnung von 200 bis 250 bar.

Typischerweise umfasst der primäre hydraulische Verbraucher insbesondere neben einer hydraulischen Bremsanlage eine hydrostatische Fahrzeuglenkung mit einem Lenkorbitrol sowie ein dem Lenkorbitrol vorgeschaltetes Druckregelventil, das entsprechend einer über ein Drosselelement abfallenden Druckdifferenz nach Maßgabe eines eine Lastanforderung der hydrostatischen Fahrzeuglenkung repräsentierenden Lastmeldedrucks betätigt wird. Sich in einer kurzfristigen Erhöhung des Lastmeldedrucks äußernde Lastspitzen, die beim Betrieb der hydrostatischen Fahrzeuglenkung auftreten, führen zu einer Betätigung des Druckregelventils in Richtung einer durchlässigen Stellung, was aufgrund der kurzen Regelstrecke zu einer besonders reaktionsarmen und damit "dynamischen" Anpassung eines zum Betrieb der hydrostatischen Fahrzeuglenkung vorgesehenen Versorgungsdrucks führt. Die Druckdifferenz wird hierzu in der Größenordnung von 10 bis 20 bar vorgegeben.

Der geringfügige, aber kontinuierliche Fluss von Hydraulikflüssigkeit durch das Drosselelement im Bereich von 1 bis 5 Litern pro Minute gewährleistet zudem, dass ein innerhalb des Hydraulikreislaufs der hydrostatischen Fahrzeuglenkung bei einem Kaltstart des landwirtschaftlichen Traktors vorhandenes Temperaturgefälle rasch abgebaut wird, ein Verklemmen insbesondere des Lenkorbitrols aufgrund thermischer Unterschiede bzw. dadurch verursachter mechanischer Spannungen nicht auftritt. Dies ist vor allem bei niedrigen bzw. winterlichen Außentemperaturen von Belang.

Zusätzlich oder alternativ kann von der Kontrolleinheit ein zum Betrieb des primären hydraulischen Verbrauchers bereitgestellter Versorgungsdruck durch Anpassung des Pumpenschwenkwinkels und damit des Verdrängungsvolumens der Hydraulikpumpe begrenzt werden. Die Begrenzung erfolgt auf einen Wert unterhalb des zulässigen Höchstwerts des Systemdrucks und liegt für den Fall, dass es sich bei dem primären hydraulischen Verbraucher um eine hydrostatische Fahrzeuglenkung handelt, beispielsweise in der Größenordnung von 170 bis 200 bar. Der aktuelle Versorgungsdruck kann von der Kontrolleinheit aus dem von der hydrostatischen Fahrzeuglenkung an die Kontrolleinheit mitgeteilten Lastmeldedruck (gegebenenfalls unter Berücksichtigung der über das vorgenannte Drosselelement abfallenden Druckdifferenz) abgeleitet werden.

Zur Erfassung des von den primären bzw. sekundären hydraulischen Verbrauchern jeweils mitgeteilten Lastmeldedrucks dient typischerweise ein in einer jeweiligen Lastmeldeleitung angeordneter Drucksensor, dessen Sensorsignale der Kontrolleinheit zur Auswertung zugeführt werden. Im Falle mehrerer hydraulischer Verbraucher wählt die Kontrolleinheit den jeweils höchsten Lastmeldedruck zur Einregelung des Systemdrucks durch entsprechende Anpassung des Pumpenschwenkwinkels mittels eines zugehörigen elektrisch betätigbaren Aktuators aus. Zusammen mit den an die Kontrolleinheit rückgemeldeten Sensorsignalen des Schwenkwinkelsensors wird so ein Regelkreis für den einzustellenden Pumpenschwenkwinkel gebildet.

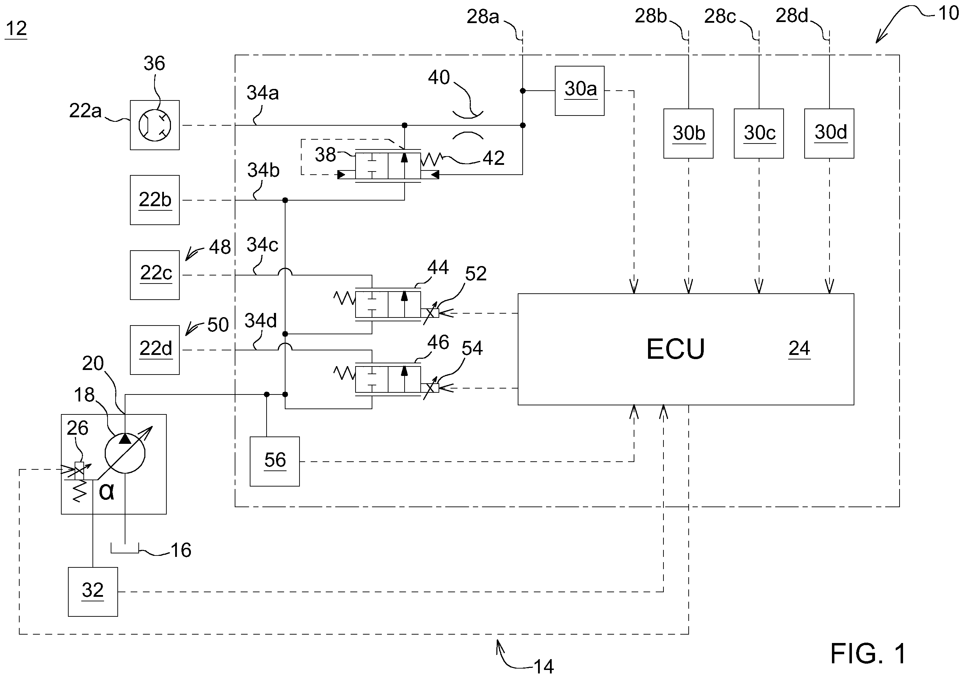

Die einzige Figur zeigt ein Ausführungsbeispiel einer Vorrichtung zum Betreiben einer lastgesteuerten Hydraulikversorgung eines (nicht dargestellten) landwirtschaftlichen Traktors.

Die von einem Hydrauliksystem 10 des landwirtschaftlichen Traktors 12 umfasste Vorrichtung 14 weist eine aus einem Hydraulikreservoir 16 mit Hydraulikflüssigkeit gespeiste sowie bezüglich ihres Verdrängungsvolumens einstellbare Hydraulikpumpe 18 mit einem Förderausgang 20 zur Versorgung einer Vielzahl hydraulischer Verbraucher 22a, 22b, 22c, 22d mit unter Druck stehender Hydraulikflüssigkeit auf.

Die Einstellung des Verdrängungsvolumens der Hydraulikpumpe 18 erfolgt durch Anpassung eines Pumpenschwenkwinkels α mittels eines von einer Kontrolleinheit 24 elektrisch betätigbaren Aktuators 26, und zwar nach Maßgabe einer durch einen jeweiligen Lastmeldedruck LS_P1S, LS_P1B, LS_P2, LS_P3 repräsentierten Lastanforderung der hydraulischen Verbraucher 22a, 22b, 22c, 22d. Zur Erfassung des Lastmeldedrucks LS_P1S, LS_P1B, LS_P2, LS_P3 dient ein in einer jeweiligen Lastmeldeleitung 28a, 28b, 28c, 28d angeordneter Drucksensor 30a, 30b, 30c 30d, dessen Sensorsignale der Kontrolleinheit 24 zur Auswertung zugeführt werden. Zusammen mit den an die Kontrolleinheit 24 rückgemeldeten Sensorsignalen eines Schwenkwinkelsensors 32 wird so ein Regelkreis für den einzustellenden Pumpenschwenkwinkel α gebildet. Hierbei regelt die Kontrolleinheit 24 einen dem jeweils höchsten erfassten Lastmeldedruck LS_P1S, LS_P1B, LS_P2, LS_P3 entsprechenden Systemdruck P am Förderausgang 20 der Hydraulikpumpe 18 ein.

Die hydraulischen Verbraucher 22a, 22b, 22c, 22d sind in primäre hydraulische Verbraucher 22a, 22b und sekundäre hydraulische Verbraucher 22c, 22d unterteilt. Die primären hydraulischen Verbraucher 22a, 22b dienen der Ausführung übergeordneter Hydraulikfunktionen einer hydraulischen Bremsanlage sowie einer hydrostatischen Fahrzeuglenkung, wohingegen von den sekundären hydraulischen Verbrauchern 22c, 22d ausgeführte untergeordnete Hydraulikfunktionen den Betrieb von Komfort- und Arbeitsfunktionen des landwirtschaftlichen Traktors 12, wie zum Beispiel einer hydraulischen Achs- oder Kabinenfederung, einer Arbeitshydraulik einschließlich der Versorgung hydraulisch betriebener Arbeitsaggregate eines an dem landwirtschaftlichen Traktor 12 angebrachten Zusatz- oder Anbaugeräts, aber auch eines hydraulisch betätigbaren Dreipunkt-Krafthebers betreffen. An einer jeweiligen Versorgungsleitung 34a, 34b, 34c, 34d steht ein zum Betrieb des betreffenden primären bzw. sekundären hydraulischen Verbrauchers 22a, 22b, 22c, 22d geeigneter Versorgungsdruck P_P1S, P_P1B, P_P2, P_P3 zur Verfügung.

Die von dem landwirtschaftlichen Traktor 12 umfasste hydrostatische Fahrzeuglenkung ist von herkömmlicher Bauart und weist ein lediglich schematisch angedeutetes Lenkorbitrol 36 sowie ein dem Lenkorbitrol 36 vorgeschaltetes Druckregelventil 38 auf, das entsprechend einer über ein Drosselelement 40 abfallenden Druckdifferenz entgegen einer mittels eines Federelements 42 aufgebrachten Rückstellkraft nach Maßgabe einer durch den Lastmeldedruck LS_P1S repräsentierten Lastanforderung der hydrostatischen Fahrzeuglenkung betätigt wird. Die übrigen Komponenten der hydrostatischen Fahrzeuglenkung, wie zum Beispiel eine Lenkhandhabe, ein hydraulischer Lenkzylinder und dergleichen, sind aus Gründen der Übersichtlichkeit nicht abgebildet. Sich in einer kurzfristigen Erhöhung des Lastmeldedrucks LS_P1S äußernde Lastspitzen, die beim Betrieb der hydrostatischen Fahrzeuglenkung auftreten, führen zu einer Betätigung des Druckregelventils 38 entgegen der Rückstellkraft des Federelements 42 in Richtung einer durchlässigen Stellung, was aufgrund der kurzen Regelstrecke zu einer besonders reaktionsarmen und damit "dynamischen" Anpassung des zum Betrieb der hydrostatischen Fahrzeuglenkung vorgesehenen Versorgungsdrucks P_P1S führt. Die Druckdifferenz ist hierzu in der Größenordnung von 10 bis 20 bar vorgegeben.

Der geringfügige, aber kontinuierliche Fluss von Hydraulikflüssigkeit durch das Drosselelement 40 im Bereich von 1 bis 5 Litern pro Minute gewährleistet zudem, dass ein innerhalb des Hydraulikreislaufs der hydrostatischen Fahrzeuglenkung bei einem Kaltstart des landwirtschaftlichen Traktors 12 vorhandenes Temperaturgefälle rasch abgebaut wird, ein Verklemmen insbesondere des Lenkorbitrols 36 aufgrund thermischer Unterschiede bzw. dadurch verursachter mechanischer Spannungen nicht auftritt. Dies ist vor allem bei niedrigen bzw. winterlichen Außentemperaturen von Belang.

Wie weiterhin in der Figur zu erkennen ist, sind die primären hydraulischen Verbraucher 22a, 22b unmittelbar, die sekundären hydraulischen Verbraucher 22c, 22d hingegen über zwischengeschaltete elektrisch betätigbare Proportionalventile 44, 46 mit dem Förderausgang 20 der Hydraulikpumpe 18 verbunden bzw. verbindbar. Die sekundären hydraulischen Verbraucher 22c, 22d sind in erste bzw. zweite Gruppen 48, 50 unterteilt, wobei sich jede der beiden Gruppen 48, 50 über ein separates erstes bzw. zweites Proportionalventil 44, 46 mit dem Förderausgang 20 der Hydraulikpumpe 18 verbinden lässt. Die Darstellung zweier Gruppen 48, 50 soll dabei lediglich beispielhaften Charakter haben, es kann auch eine davon abweichende Anzahl an Gruppen bzw. Proportionalventilen vorgesehen sein.

Erkennt die Kontrolleinheit 24, dass die angeforderte Leistung der primären bzw. sekundären hydraulischen Verbraucher 22a, 22b, 22c, 22d die Förderkapazität der Hydraulikpumpe 18 überschreitet und/oder eine den sekundären hydraulischen Verbrauchern 22c, 22d zugeordnete Hydraulikfunktion inaktiv ist, so verbringt diese die Proportionalventile 44, 46 durch Ansteuerung eines ersten bzw. zweiten elektrischen Aktuators 52, 54 in eine geschlossene Ventilstellung. Dies erlaubt es, durch gezielte Drosselung des durch die Proportionalventile 44, 46 hindurchtretenden Hydraulikvolumenstroms neben einer Priorisierung der hydraulischen Versorgung der primären hydraulischen Verbraucher 22a, 22b eine Energieeinsparung hinsichtlich inaktiver Hydraulikfunktionen sekundärer hydraulischer Verbraucher 22c, 22d zu verwirklichen. Gemäß einer optionalen Ausgestaltung der Vorrichtung 14 steuert die Kontrolleinheit 24 die Proportionalventile 44, 46 derart an, dass eine Priorisierung der Hydraulikversorgung der primären hydraulischen Verbraucher 22a, 22b vorrangig zulasten sekundärer hydraulischer Verbraucher 22c, 22d mit inaktiver Hydraulikfunktion erfolgt. Unerwünschte Einschränkungen aktiver Hydraulikfunktionen durch unnötige Drosselung der hydraulischen Versorgung werden so weitgehend vermieden. Als Beispiel sei hier eine bei stillstehendem landwirtschaftlichen Traktor 12 inaktive hydraulische Achs- oder Kabinenfederung erwähnt.

Sind entsprechend dem in der Figur wiedergegebenen Ausführungsbeispiel der Vorrichtung 14 mehrere Proportionalventile 44, 46 vorhanden, so werden diese zur Reduzierung des Leistungsbedarfs entsprechend der Förderkapazität der Hydraulikpumpe 18 in einer vorgegebenen Reihenfolge in ihre geschlossene Stellung verbracht. Letzteres erfolgt schrittweise nur insoweit, als dies zur Wiederherstellung einer ausreichenden Hydraulikversorgung der primären hydraulischen Verbraucher 22a, 22b erforderlich ist. Hierdurch lässt sich eine weitere Unterteilung bzw. Abstufung der Versorgungsprioritäten der sekundären hydraulischen Verbraucher 22c, 22d verwirklichen, sodass der Betrieb bestimmter Hydraulikfunktionen so weit wie möglich aufrechterhalten werden kann. So kann bezüglich der Reihenfolge der Drosselung des durch die Proportionalventile 44, 46 hindurchtretenden Hydraulikvolumenstroms vorgesehen sein, dass zunächst Komfortfunktionen und erst danach gegebenenfalls Arbeitsfunktionen betroffen sind. Bei weniger anspruchsvollen Anwendungen ist es aber auch denkbar, beide Proportionalventile 44, 46 synchron in ihre (vollständig) geschlossene Stellung zu verbringen.

Dabei schließt die Kontrolleinheit 24 auf eine die Förderkapazität der Hydraulikpumpe 18 überschreitende Leistungsanforderung der primären bzw. sekundären hydraulischen Verbraucher 22a, 22b, 22c, 22d, wenn die Hydraulikpumpe 18 einen auf ein maximales Verdrängungsvolumen hinweisenden Betriebszustand einnimmt und zugleich eine zulässige Druckdifferenz zwischen dem am Förderausgang 20 der Hydraulikpumpe 18 anliegenden Systemdruck P und dem jeweils höchsten Lastmeldedruck LS_P1S, LS_P1B, LS_P2, LS_P3 unterschritten ist. Die Druckdifferenz liegt je nach verwendeter Hydraulikpumpe 18 im Bereich von 10 bis 30 bar, und stellt eine gegenüber druckmindernden Leitungsverlusten des an die Kontrolleinheit 24 mitgeteilten Lastmeldedrucks LS_P1S, LS_P1B, LS_P2, LS_P3 tolerante Einregelung des Verdrängungsvolumens sicher. Zur Erfassung des Systemdrucks P dient ein dem Förderausgang 20 der Hydraulikpumpe 18 zugeordneter Drucksensor 56, dessen Sensorsignale der Kontrolleinheit 24 zur Auswertung zugeführt werden.

Die Kontrolleinheit 24 erkennt den auf ein maximales Verdrängungsvolumen hinweisenden Betriebszustand der Hydraulikpumpe 18 durch Auswertung des Pumpenschwenkwinkels α. Dabei nimmt das Verdrängungsvolumen mit dem Betrag des Pumpenschwenkwinkels α kontinuierlich zu. Dementsprechend ist ein Erreichen der zur Verfügung stehenden Förderkapazität der Hydraulikpumpe 18 daran erkennbar, dass der Pumpenschwenkwinkel α einen voll ausgelenkten Zustand in Richtung eines Endanschlags einnimmt. Das Erreichen eines derartigen Betriebszustands stellt einen verlässlichen Hinweis für eine potentiell bevorstehende Unterversorgung des primären hydraulischen Verbrauchers 22a, 22b dar. Solange dieser kritische Zustand nicht erreicht ist, befinden sich die beiden Proportionalventile 44, 46 in ihrer vollständig geöffneten Stellung.

Um überdruckbedingten Schäden des Hydrauliksystems 10 oder der damit betriebenen hydraulischen Verbraucher 22a, 22b, 22c, 22d bzw. peripherer Komponenten vorzubeugen, ist vorgesehen, dass von der Kontrolleinheit 24 der am Förderausgang 20 der Hydraulikpumpe 18 anliegende Systemdruck P durch Anpassung des Pumpenschwenkwinkels α und damit des Verdrängungsvolumens begrenzt wird. Die Begrenzung des Systemdrucks P erfolgt hierbei entsprechend einem zulässigen Höchstwert in der Größenordnung von 200 bis 250 bar.

Ferner wird von der Kontrolleinheit 24 der zum Betrieb der hydrostatischen Fahrzeuglenkung bereitgestellte Versorgungsdruck P_P1S durch Anpassung des Pumpenschwenkwinkels α und damit des Verdrängungsvolumens der Hydraulikpumpe 18 begrenzt. Die Begrenzung erfolgt auf einen Wert unterhalb des zulässigen Höchstwerts des Systemdrucks P und liegt in der Größenordnung von 170 bis 200 bar. Der aktuelle Versorgungsdruck P_P1S wird von der Kontrolleinheit 24 aus dem von der hydrostatischen Fahrzeuglenkung an die Kontrolleinheit 24 mitgeteilten Lastmeldedruck LS_P1S unter Berücksichtigung der über das Drosselelement 40 abfallenden Druckdifferenz abgeleitet.

## Patentansprüche

1. Vorrichtung zum Betreiben einer lastgesteuerten Hydraulikversorgung eines landwirtschaftlichen Traktors, umfassend eine bezüglich ihres Verdrängungsvolumens einstellbare Hydraulikpumpe (18) zur Versorgung eines hydraulischen Verbrauchers (22a, 22b, 22c, 22d) mit unter Druck stehender Hydraulikflüssigkeit, **dadurch gekennzeichnet, dass** ein zur Ausführung einer übergeordneten Hydraulikfunktion vorgesehener primärer hydraulischer Verbraucher (22a, 22b) unmittelbar und ein zur Ausführung einer untergeordneten Hydraulikfunktion vorgesehener sekundärer hydraulischer Verbraucher (22c, 22d) über ein zwischengeschaltetes elektrisch betätigbares Proportionalventil (44, 46) mit einem Förderausgang (20) der Hydraulikpumpe (18) verbunden bzw. verbindbar ist, wobei das Proportionalventil (44, 46) von einer Kontrolleinheit (24) in eine geschlossene Ventilstellung verbracht wird, wenn diese erkennt, dass die angeforderte Leistung der hydraulischen Verbraucher (22a, 22b, 22c, 22d) die Förderkapazität der Hydraulikpumpe (18) überschreitet und/oder die dem sekundären hydraulischen Verbraucher (22c, 22d) zugeordnete Hydraulikfunktion inaktiv ist.

2. Verfahren nach Anspruch 1, **dadurch gekennzeichnet, dass** die Kontrolleinheit (24) auf eine die Förderkapazität der Hydraulikpumpe (18) überschreitende Leistungsanforderung der primären bzw. sekundären hydraulischen Verbraucher (22a, 22b, 22c, 22d) schließt, wenn die Hydraulikpumpe (18) einen auf ein maximales Verdrängungsvolumen hinweisenden Betriebszustand einnimmt.

3. Verfahren nach Anspruch 2, **dadurch gekennzeichnet, dass** die Kontrolleinheit (24) auf eine die Förderkapazität der Hydraulikpumpe (18) überschreitende Leistungsanforderung schließt, wenn diese erkennt, dass eine zulässige Druckdifferenz zwischen einem am Förderausgang (20) der Hydraulikpumpe (18) anliegenden Systemdruck und dem jeweils höchsten Lastmeldedruck der hydraulischen Verbraucher (22a, 22b, 22c, 22d) unterschritten ist.

4. Verfahren nach Anspruch 2 oder 3, **dadurch gekennzeichnet, dass** die Kontrolleinheit (24) den auf ein maximales Verdrängungsvolumen hinweisenden Betriebszustand der Hydraulikpumpe (18) durch Auswertung eines Pumpenschwenkwinkels erkennt.

5. Verfahren nach wenigstens einem der Ansprüche 1 bis 4, **dadurch gekennzeichnet, dass** mehrere über separate Proportionalventile (44 46) mit dem Förderausgang (20) der Hydraulikpumpe (18) verbindbare sekundäre hydraulische Verbraucher (22c, 22d) vorhanden sind, wobei von der Kontrolleinheit (24) zur Reduzierung des Leistungsbedarfs entsprechend der Förderkapazität der Hydraulikpumpe (18) die Proportionalventile (44, 46) synchron und/oder in einer vorgegebenen Reihenfolge in eine geschlossene Stellung verbracht werden.

6. Verfahren nach wenigstens einem der Ansprüche 1 bis 5, **dadurch gekennzeichnet, dass** von der Kontrolleinheit (24) ein am Förderausgang (20) der Hydraulikpumpe (18) anliegender Systemdruck durch Anpassung des Verdrängungsvolumens begrenzt wird.

7. Verfahren nach wenigstens einem der Ansprüche 1 bis 6, **dadurch gekennzeichnet, dass** der primäre hydraulische Verbraucher (22a, 22b) insbesondere neben einer hydraulischen Bremsanlage eine hydrostatische Fahrzeuglenkung mit einem Lenkorbitrol (36) sowie ein dem Lenkorbitrol (36) vorgeschaltetes Druckregelventil (38) umfasst, das entsprechend einer über ein Drosselelement (40) abfallenden Druckdifferenz nach Maßgabe eines eine Lastanforderung der hydrostatischen Fahrzeuglenkung repräsentierenden Lastmeldedrucks betätigt wird.

8. Verfahren nach wenigstens einem der Ansprüche 1 bis 7, **dadurch gekennzeichnet, dass** von der Kontrolleinheit (24) ein zum Betrieb des primären hydraulischen Verbrauchers (22a) bereitgestellter Versorgungsdruck durch Anpassung des Verdrängungsvolumens der Hydraulikpumpe (18) begrenzt wird.
